# EUROPEAN PATENT APPLICATION

(11) **EP 4 458 183 A1**
(43) Date of publication of application: **06.11.2024**
(21) Application number: 23752405.3
(22) Date of filing: 09.02.2023
(51) Int. Cl.: A24F 40/40, A24F 40/10

(54) **ELECTRONIC ATOMIZATION DEVICE AND SUPPORT FOR ELECTRONIC ATOMIZATION DEVICE**

(30) Priority: 14.02.2022 CN 202210132227
(71) Applicant: Shenzhen First Union Technology Co., Ltd., Shenzhen, Guangdong 518000 (CN)
(72) Inventor: LI, Fuyi, Shenzhen, Guangdong 518000 (CN); LU, Linhai, Shenzhen, Guangdong 518000 (CN); XU, Zhongli, Shenzhen, Guangdong 518000 (CN); LI, Yonghai, Shenzhen, Guangdong 518000 (CN)
(74) Representative: Ran, Handong
(86) International application number: PCT/CN2023/075235
(87) International publication number: WO 2023/151625

(57) **Abstract**

An electronic atomization device (100) and a support (30) for the electronic atomization device (100), wherein the electronic atomization device (100) comprises: a housing (10, 20) having a proximal end (110) and a distal end (120) facing away from each other, the housing (10, 20) being internally provided with: a liquid storage cavity (12) for storing a liquid matrix; a support (30) comprising a first supporting portion (40) close to the proximal end (110) in a longitudinal direction, and a second supporting portion (50) close to the distal end (120); an atomization assembly used for atomizing the liquid matrix to generate aerosol, the atomization assembly being at least partially accommodated and held in the first supporting portion (40); and a cell (80) used for supplying power to the atomization assembly and at least partially accommodated and held in the second supporting portion (50). The electronic atomization device (100) accommodates and holds the atomization assembly and the cell (80) by means of the first supporting portion (40) and the second supporting portion (50) of the support (30), respectively.

## Description

### CROSS-REFERENCE TO RELATED APPLICATIONS

This application claims priority to Chinese Patent Application No. 202210132227.6, filed with the China National Intellectual Property Administration on February 14, 2022 and entitled "ELECTRONIC ATOMIZATION DEVICE AND SUPPORT FOR ELECTRONIC ATOMIZATION DEVICE", which is incorporated herein by reference in its entirety.

### TECHNICAL FIELD

Embodiments of this application relate to the field of electronic atomization technologies, and in particular, to an electronic atomization device and a support for an electronic atomization device.

### BACKGROUND

During use of smoking products (such as cigarettes or cigars), tobacco is burnt to produce smoke. Attempts are made to manufacture products that release compounds without burning of tobacco to replace these tobacco-burning products.

A heating device is an example of the products, which releases compounds by heating rather than burning materials. For example, the materials may be tobacco or non-tobacco products that may or may not include nicotine. In another example, aerosol providing products, for example, the so-called electronic atomization devices exist. The devices usually include a liquid, which is heated and atomized, so as to generate an inhalable aerosol. The liquid may contain nicotine and/or aromatics and/or aerosol-generation substances (such as glycerin). An existing heating device includes an atomization assembly configured to absorb and hold a liquid and a cell configured to supply power to the atomization assembly. In the existing heating device, the atomization assembly and the cell are independently supported through a plurality of support elements, to stably hold the atomization assembly and the cell within the electronic atomization device.

### SUMMARY

An embodiment of this application provides an electronic atomization device, including a housing. The housing has a proximal end and a distal end facing away from each other. The housing is provided therein with:
a liquid storage cavity, configured to store a liquid substrate;
a support, including a first support portion close to the proximal end in a longitudinal direction and a second support portion close to the distal end;
an atomization assembly, configured to atomize the liquid substrate to generate an aerosol, where the atomization assembly is at least partially accommodated and held in the first support portion; and
a cell, configured to supply power to the atomization assembly and at least partially accommodated and held in the second support portion.

In a preferred implementation, the first support portion and the second support portion of the support are integrally molded by using a moldable material.

In a preferred implementation, an extension length of the second support portion is greater than an extension length of the first support portion.

A width dimension of the second support portion is greater than a width dimension of the first support portion.

In a preferred implementation, the second support portion defines a first holding space and a second holding space arranged in sequence, and the second holding space is closer to the distal end than the first holding space.

The cell is at least partially accommodated and held in the first holding space.

The second holding space is configured to at least partially accommodate and hold an airflow sensor.

In a preferred implementation, the electronic atomization device further includes:
an electrical contact, held on the support and configured to guide a current between the cell and the atomization assembly, where the electrical contact is arranged to extend from the second support portion to the first support portion.

In a preferred implementation, the housing includes a first housing close to the proximal end and a second housing close to the distal end.

The first housing is arranged to surround the first support portion and avoid the second support portion, and the second housing is arranged to surround the second support portion.

In a preferred implementation, the first housing defines the liquid storage cavity.

In a preferred implementation, the support has a transverse direction perpendicular to the longitudinal direction.

The first support portion has a first cavity, and the atomization assembly is accommodated in the first cavity.

The first support portion has a first opening provided in the transverse direction, and the atomization assembly is configured to be accommodated in the first cavity or removed from the first cavity through the first opening in the transverse direction.

In a preferred implementation, a width of the first opening is greater than a length of the atomization assembly.

In some implementations, the foregoing "transverse direction" perpendicular to the longitudinal direction may be a width direction perpendicular to the longitudinal direction. Alternatively, in some other implementations, the "transverse direction" is a thickness direction perpendicular to both the longitudinal direction and the width direction.

In a preferred implementation, the first support portion is further provided with a second opening facing away from the first opening in the transverse direction, and a width of the second opening is less than a width of the first opening.

In a preferred implementation, the electronic atomization device further includes:
a flexible first sealing element, including a first peripheral side wall, where the first peripheral side wall is arranged to be located between the first support portion and the housing and at least partially surround the first support portion, to provide sealing between the first support portion and the housing.

In a preferred implementation, the electronic atomization device further includes:
an air channel, defined between the first support portion and the first sealing element to provide a flowing path for air to enter the liquid storage cavity.

In a preferred implementation, the first support portion is provided with a vent hole.

The first sealing element further includes a columnar portion at least partially located within the vent hole, and the air channel is defined between an outer surface of the columnar portion and an inner surface of the vent hole.

In a preferred implementation, the first sealing element further includes a first end wall, a liquid guide hole is provided on the first end wall, and the first end wall is constructed to seal the liquid storage cavity, so that the liquid substrate substantially leaves only through the liquid guide hole.

The columnar portion extends from the first end wall into the vent hole.

In a preferred implementation, an avoidance hole adjacent to the columnar portion is further provided on the first end wall, so that air in the air channel enters the liquid storage cavity through the avoidance hole.

In a preferred implementation, the avoidance hole is in a shape of a curved arc.

In a preferred implementation, the electronic atomization device further includes:
a flexible second sealing element, arranged to be located between the atomization assembly and the first support portion to provide sealing between the atomization assembly and the first support portion.

In a preferred implementation, the second sealing element includes an upper end wall and a second peripheral side wall extending from the upper end wall, and the second peripheral side wall is arranged to at least partially surround the atomization assembly.

An outer surface of the upper end wall is arranged to be inclined at an angle to an axial direction of the second sealing element.

In a preferred implementation, the angle between the outer surface of the upper end wall and the longitudinal direction of the second sealing element is in a range of 5° to 30°.

In a preferred implementation, the first cavity includes a first inner surface close to the liquid storage cavity in the longitudinal direction of the support, and the first inner surface is arranged to be inclined at an angle to the longitudinal direction of the support.

In a preferred implementation, the first support portion further defines:
a second cavity, located between the first cavity and the second support portion, where the second cavity is in fluid communication with the first cavity to receive and hold an aerosol condensate in the first cavity.

Another embodiment of this application further provides a support for an electronic atomization device. The support includes a first support portion and a second support portion arranged in sequence in a longitudinal direction, an extension length of the first support portion is less than an extension length of the second support portion, and the first support portion and the second support portion of the support are integrally molded by using a moldable material.

The first support portion is configured to at least partially accommodate and hold an atomization assembly.

The second support portion is configured to at least partially accommodate and hold a cell.

In the electronic atomization device, the atomization assembly and the cell are accommodated and held through the first support portion and the second support portion of the support, respectively.

### BRIEF DESCRIPTION OF THE DRAWINGS

One or more embodiments are exemplarily described with reference to figures in drawings corresponding to the embodiments, but the exemplary descriptions do not constitute a limitation on the embodiments. Elements in the drawings having same reference numerals represent similar elements. Unless otherwise particularly stated, the figures in the drawings are not drawn to scale.
FIG. 1 is a schematic diagram of an electronic atomization device according to an embodiment.
FIG. 2 is a schematic exploded diagram of the electronic atomization device in FIG. 1 from a perspective.
FIG. 3 is a schematic sectional view of the electronic atomization device in FIG. 1 from a perspective.
FIG. 4 is a schematic sectional view of a first housing in FIG. 2 from a perspective.
FIG. 5 is a schematic sectional view of some components in FIG. 2 after fitting.
FIG. 6 is a schematic structural diagram of a support in FIG. 5 from another perspective.
FIG. 7 is a schematic diagram of a first sealing element in FIG. 2 from a perspective.
FIG. 8 is a schematic sectional view of a first sealing element in FIG. 7 from another perspective.
FIG. 9 is a schematic structural diagram of an atomization assembly in FIG. 2 from another perspective.
FIG. 10 is a schematic exploded view of a second sealing element and the atomization assembly in FIG. 2 before fitting.
FIG. 11 is a schematic diagram of the second sealing element and the atomization assembly after being fitted into the support.

### DETAILED DESCRIPTION

For ease of understanding of this application, this application is described below in more detail with reference to drawings and specific implementations.

This application provides an electronic atomization device, which is configured to atomize a liquid substrate to generate an aerosol.

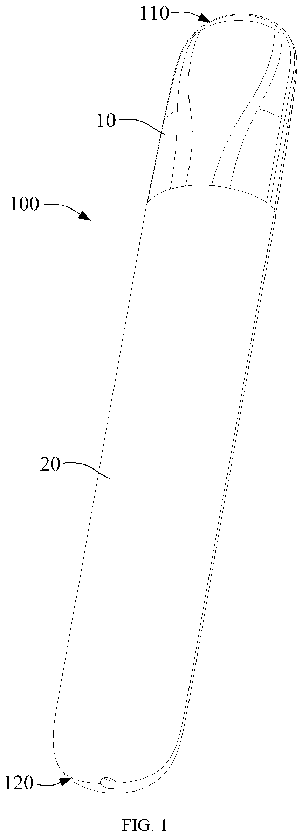

Further, FIG. 1 is a schematic diagram of an electronic atomization device 100 according to a specific embodiment. The electronic atomization device includes a plurality of components arranged in an external body or a shell (which may be referred to as a housing). An overall design of the external body or the housing may be changed, and a form or a configuration of the external body that may define an overall dimension and a shape of the electronic atomization device 100 may be changed. Generally, an elongated body may be formed by a single integrated housing, or the elongated housing may be formed by two or more separable bodies.

For example, the electronic atomization device 100 may have a control body at an end. The control body has a housing including one or more reusable components (for example, storage batteries such as a rechargeable battery and/or a rechargeable supercapacitor, and various electronic devices configured to control operations on the product). The electronic atomization device has the external body or the housing for inhalation at an other end.

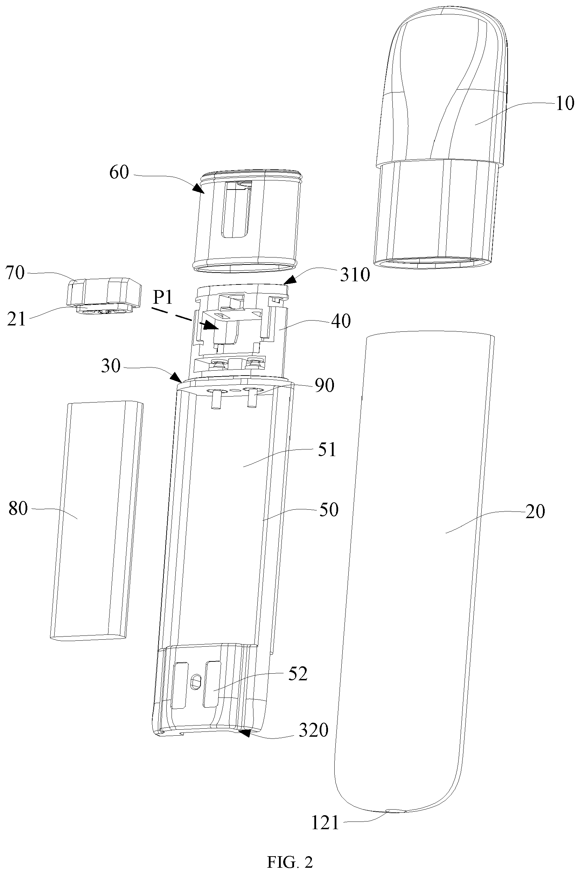

Further, in a specific embodiment shown in FIG. 1 and FIG. 2, the electronic atomization device 100 includes:
a housing, substantially defining an outer surface of the electronic atomization device 100 and having a proximal end 110 and a distal end 120 opposite each other in a longitudinal direction, where the proximal end 110 is an end close to a position of inhalation by a user during use; and the distal end 120 is an end away from the user.

In some examples, the housing may be formed by metal or an alloy such as stainless steel or aluminum. Other suitable materials include various plastic (for example, polycarbonate), metal-plating over plastic, ceramic, and the like.

Further, as shown in FIG. 1 and FIG. 2, the housing of the electronic atomization device 100 further includes:
a first housing 10, arranged close to the proximal end 110 in the longitudinal direction and defining the proximal end 110 of the housing; and
a second housing 20, arranged close to the distal end 120 in the longitudinal direction and defining the distal end 120 of the housing. In the implementation shown in FIG. 1 and FIG. 2, the first housing 10 and the second housing 20 are in a cylindrical or tubular shape with an inner cavity. The first housing 10 and the second housing 20 are substantially coaxially arranged and have substantially the same external profile and size. After fitting, the first housing 10 at least partially extends or is at least partially embedded in the second housing 20.

In terms of internal structures and functional components, the first housing 10 has therein a heating space for storing, heating, and atomizing a liquid substrate. The second housing 20 mainly has therein an electronic space for mounting and storing electronic devices, such as a cell 80 and a circuit board (not shown in the figure) configured to supply power.

In terms of external structures, the first housing 10 is provided with a suction nozzle A located at the proximal end 110 for inhalation by a user. The second housing 20 is provided with a first air inlet 121 located at the distal end 120, for external air to enter the electronic atomization device during inhalation.

As shown in FIG. 2 to FIG. 5, the electronic atomization device 100 includes:
a support 30, extending in the longitudinal direction of the electronic atomization device 100. The support 30 has a first end 310 and a second end 320 facing away from each other in the longitudinal direction. The first end 310 is close to the proximal end 110. The second end 120 is close to the distal end 120. The support 30 has a support portion 50 accommodated and fitted in the second housing 20 and a support portion 40 accommodated and fitted in the first housing 10. The support portion 40 is close to and defines the first end 310, and the support portion 50 is close to and defines the second end 320.

In some implementations, the support portion 50 and the support portion 40 of the support 30 are integrally molded in a mold by using a moldable material. The moldable material is, for example, an organic polymer, plastic, ceramic, or metal. The support 30 is rigid. The support portion 40 is configured to substantially extend in the longitudinal direction of the electronic atomization device 100.

After fitting, the support portion 50 is located in the second housing 20 and substantially avoids the first housing 10. The support portion 40 extends into the first housing 10, and is surrounded by the first housing 10.

Further, the support portion 50 defines:
a first holding space 51, configured to accommodate and hold the cell 80, where more preferably, a control circuit board is further accommodated and fixed in the first holding space 51; and
a second holding space 52, located between the first holding space 51 and the second end 320, where an airflow sensor 521 is arranged in the second holding space 52, which is configured to sense flowing of an airflow passing through the electronic atomization device during the inhalation by the user. The circuit board controls an output power of the cell 80 based on a sensing result of the airflow sensor 521 to atomize the liquid substrate.

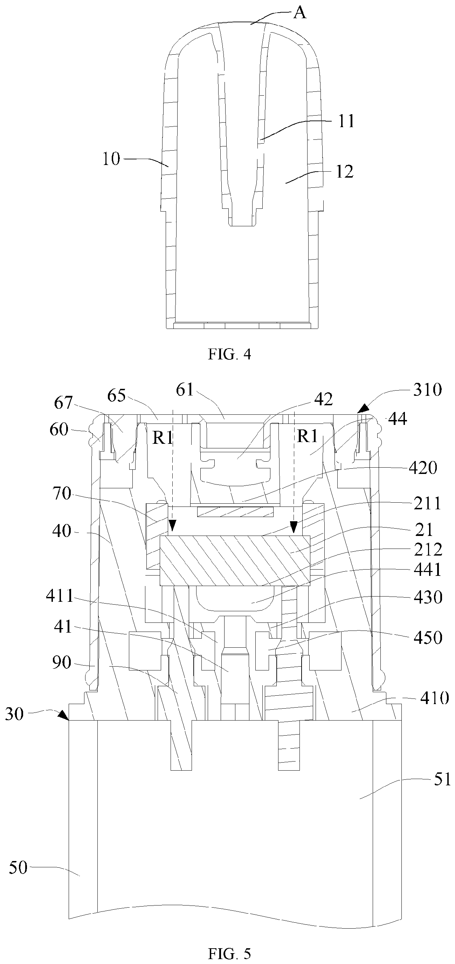

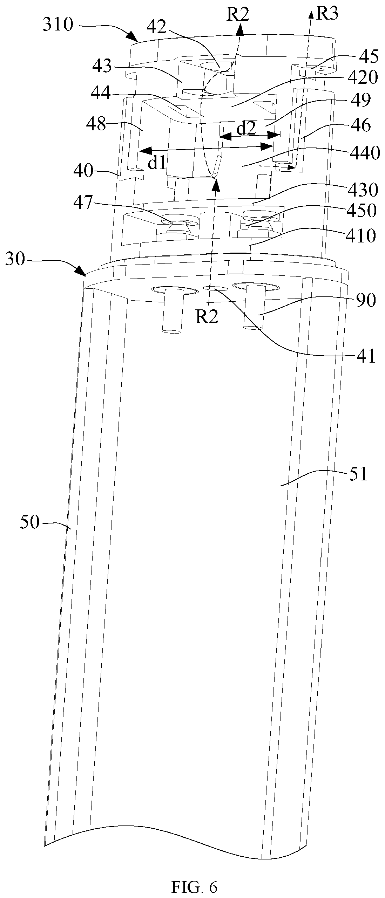

Further referring to FIG. 5 and FIG. 6, the support 30 is further provided therein with:
an electrical contact 90, running through or extending into the support portion 40 from the first holding space 51 of the support portion 50. After fitting, the electrical contact 90 is connected to a positive/negative electrode of the cell 80, so that the cell 80 outputs a power through the electrical contact 90.

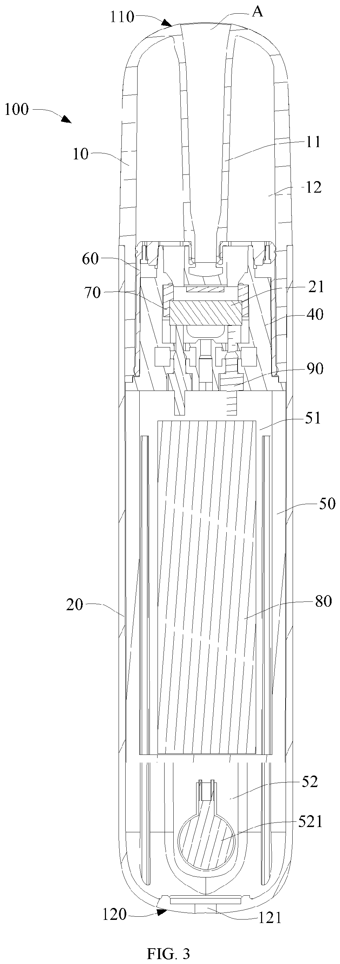

Further referring to FIG. 2 to FIG. 5, the first housing 10 include the following structures therein:
a liquid storage cavity 12, configured to store the liquid substrate and an atomization assembly configured to absorb the liquid substrate from the liquid storage cavity 12 and heat and atomize the liquid substrate. Specifically,
in the schematic structural sectional views shown in FIG. 3 and FIG. 4, the first housing 10 is provided therein with an aerosol output tube 11 arranged in an axial direction. In an implementation, at least part of the aerosol output tube 11 extends in the liquid storage cavity 12, and a space between an outer wall of the aerosol output tube 11 and an inner wall of the first housing 10 forms the liquid storage cavity 12. A first end of the aerosol output tube 11 facing the proximal end 110 is in communication with the suction nozzle A, and a second end thereof facing the distal end 120 is in airflow connection with the atomization assembly, so as to transfer the aerosol generated and released from the liquid substrate atomized by the atomization assembly to the suction nozzle A for inhalation.

An end portion of the liquid storage cavity 12 defined between the outer wall of the aerosol output tube 11 and the inner wall of the first housing 10 close to the proximal end 110 is closed, and an end portion of the liquid storage cavity 12 facing the distal end 120 is open, so that the liquid substrate can flow out only through the open end.

The atomization assembly generally includes a capillary liquid guide element configured to absorb the liquid substrate and a heating element integrated on the liquid guide element. The heating element heats at least partial liquid substrate in the liquid guide element to generate an aerosol during power on. In an optional implementation, the liquid guide element includes flexible fibers such as cotton fibers, non-woven fabrics, and glass fiber ropes, or includes porous materials with a microporous structure, such as porous ceramic. The heating element may be integrated on the liquid guide element or wound on the liquid guide element through printing, deposition, sintering, physical fitting, or the like.

Further, in a preferred implementation shown in FIG. 2, FIG. 3, FIG. 5, FIG. 9, and FIG. 10, the atomization assembly includes: a porous body 21, configured to absorb and transfer the liquid substrate; and a heating element 22, configured to heat and atomize the liquid substrate absorbed by the porous body 21. Specifically,

in terms of a structure of the porous body 21, the porous body 21 is constructed in a structure substantially in a shape of a block in this embodiment, but the present invention is not limited thereto. In a preferred design of this embodiment, the porous body 21 is in the shape of a block, and is arranged substantially perpendicular to the longitudinal direction of the electronic atomization device 100. Further, after fitting, the porous body 21 has a surface 211 and a surface 212 facing away from each other. During use, the surface 211 is in fluid communication with the liquid storage cavity 12, and serves as a liquid absorbing surface configured to absorb the liquid substrate. The surface 212 faces away from the liquid storage cavity 12, and serves an atomization surface during use, for arranging the heating element 22 to atomize the liquid substrate to generate and release the aerosol.

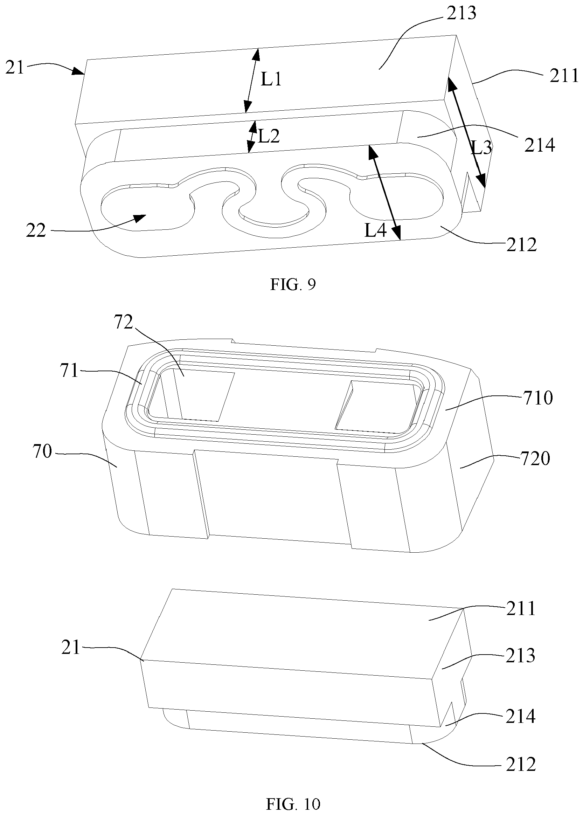

In a specific implementation shown in FIG. 9, a length dimension of the porous body 21 is in a range of about 8 mm to 15 mm, a width dimension of the porous body 21 is in a range of about 4 mm to 8 mm, and a thickness dimension of the porous body 21 is in a range of about 3 mm to 6 mm.

Further referring to FIG. 9, the porous body 21 has a porous portion 213 and a porous portion 214 extending between the surface 211 and the surface 212. The porous portion 213 defines the surface 211, and the porous portion 214 defines the surface 212. A thickness dimension L1 of the porous portion 213 is greater than a thickness dimension L2 of the porous portion 214. A width dimension L3 of the porous portion 213 is greater than a width dimension L4 of the porous portion 214. In a specific implementation, the thickness dimension L1 of the porous portion 213 is in a range of about 2 mm to 4 mm, and the thickness dimension L2 of the porous portion 214 is in a range of about 1 mm to 2 mm. The width dimension L3 of the porous portion 213 is in a range of about 4 mm to 8 mm, and the width dimension L4 of the porous portion 214 is in a range of about 3 mm to 6 mm.

Certainly, the heating element 22 is formed on the surface 212. After fitting, the electrical contact 90 abuts against the heating element 22 to form an electrical connection, so as to supply power to the heating element 22.

After the fitting, the atomization assembly including the porous body 21 and the heating element 22 is accommodated in the support portion 40. Specifically, after the fitting, a side wall of the porous portion 213 of the porous body 21 in a width direction abuts against the support portion 40 for holding, and However, a side wall of the porous portion 214 and/or the surface 212 in the width direction is not in contact with or is spaced apart from the support portion 40, which is advantages to prevention of heat of the surface 212 and/or the heating element 22 from being transferred to the support portion 40.

Specifically, FIG. 3, FIG. 5, and FIG. 6 show a structure of the support portion 40 of the support 30, including:
a connecting end portion 410, close to and connected to the support portion 50. The connecting end portion 410 at least partially protrudes in a radial direction relative to rest portions of the support portion 40, so that the first housing 10 abuts against the connecting end portion 410 for stop after fitting.

The support portion 40 further has a separation wall 420 and a separation wall 430 spaced apart in sequence in the longitudinal direction. The separation wall 420 and the separation wall 430 both extend in a direction perpendicular to a longitudinal direction of the support portion 40. In a preferred implementation, the separation wall 420 and the separation wall 430 are in a shape of a thin sheet or plate.

A cavity 440 is defined between the separation wall 420 and the separation wall 430 of the support portion 40. After fitting, the atomization assembly is accommodated and held in the cavity 440. After the fitting, the surface 212 of the porous body 21 used for atomization is adjacent to or faces the separation wall 430, and the surface 212 and the separation wall 430 are spaced apart from each other. Further, after the fitting, a part of the cavity 440 located between the surface 212 and the separation wall 430 forms an atomization chamber 441. The aerosol atomized by the surface 212 is released into the atomization chamber 441 and then outputted to the aerosol output tube 11.

A contact hole 47 is provided on the separation wall 430. After the fitting, the electrical contact 90 extends through the contact hole 47 and abuts against the heating element 22 to form an electrical connection. After the fitting, a gap or a spacing is maintained between the electrical contact 90 and the contact hole 47.

A cavity 450 is defined between the separation wall 430 and the connecting end portion 410. After the fitting, the cavity 450 is in fluid communication with the cavity 440/the atomization chamber 441 through the gap or the spacing between the electrical contact 90 and the contact hole 47. In this way, during use, an aerosol condensate in the cavity 440/the atomization chamber 441 seeps into the cavity 450 through the gap or the spacing between the electrical contact 90 and the contact hole 47. The cavity 450 serves as a condensate collection cavity to collect and hold the aerosol condensate generated in the cavity 440/the atomization chamber 441.

Two sides of the cavity 450 in a thickness direction of the support portion 40 are open, and are closed after the fitting to prevent the collected condensate from seeping out.

Further referring to FIG. 3, FIG. 5, and FIG. 6, an upper end of the support portion 40 close to the liquid storage cavity 12 is provided with a plug-in hole 42, for a lower end of the aerosol output tube 11 to be fitted into the plug-in hole 42 during fitting. In addition, the support portion 40 has a liquid channel 44 extending from the upper end to the separation wall 420. After the fitting, the liquid channel 44 is at least partially opposite the surface 212 of the porous body 21 in the longitudinal direction of the support portion 40, and is connected to the surface. In this way, the liquid substrate in the liquid storage cavity 12 can be transferred to the surface 212 of the porous body 21 through the liquid channel 44, as shown by an arrow R1 in FIG. 5.

Referring to FIG. 6, at least one side of the support portion 40 in the thickness direction is provided with a window 43. The cavity 440/the atomization chamber 441 is in airflow communication with the plug-in hole 42 through the window 43.

The support portion 40 further has an air inlet channel 41. The air inlet channel 41 is in communication with the first air inlet 121 at the distal end 120, so that air entering the first air inlet 121 enters the atomization chamber 441 during inhalation. Specifically, the air inlet channel 41 extends from the connecting end portion 410 to the separation wall 430. External air extends to a position close to the support portion 40 in the longitudinal direction of the second housing 20 through the first air inlet 121, and enters the atomization chamber 441 through the air inlet channel 41. In addition, the air inlet channel 41 is at least partially defined by a tubular wall 411 located in the cavity 450, as shown in FIG. 5 and FIG. 6, so that the air inlet channel 41 and the cavity 450 are isolated from each other.

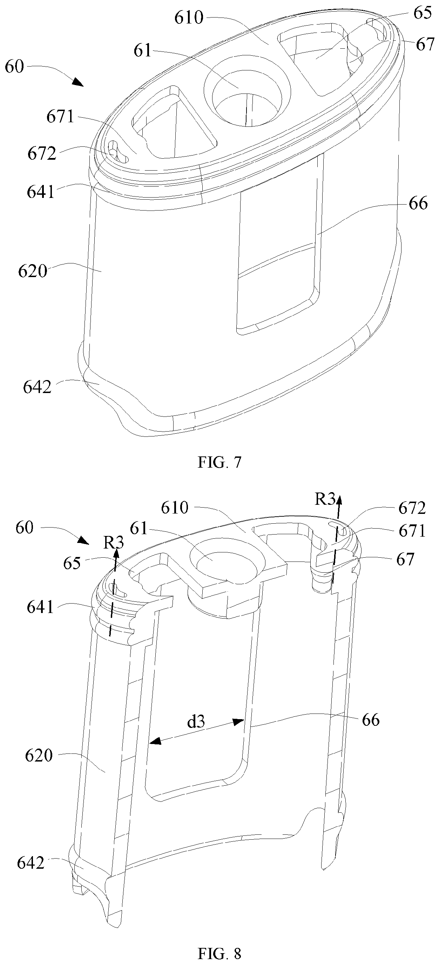

As shown in FIG. 4, FIG. 5, and an arrow R2 in FIG. 7, on a complete inhalation airflow path, the external air enters the atomization chamber 441 through the air inlet channel 41, and carries the generated aerosol to span or bypass the porous body 21, and then enters the aerosol output tube 11 through the window 43 for output.

Further referring to FIG. 6, an opening 48 is formed on a side of the cavity 440 in the thickness direction of the support portion 40, and an opening 49 is formed on an other side thereof. In the implementation shown in FIG. 6, a width dimension d1 of the opening 48 substantially matches the length of the porous body 21, a width dimension d2 of the opening 49 is less than the length of the porous body 21, and the width dimension d1 of the opening 48 is greater than the width dimension d2 of the opening 49. In this way, during fitting, the atomization assembly or the porous body 21 is allowed to be fitted into or removed from the cavity 440 in the thickness direction through the opening 48, and the atomization assembly or the porous body 21 is prevented from being fitted into or removed from the cavity 440 through the opening 49. The width dimension d1 of the opening 48 is in a range of about 8 mm to 15 mm. The width dimension d2 of the opening 49 is in a range of about 4 mm to 6 mm.

Further referring to FIG. 2 to FIG. 8, the electronic atomization device 100 further includes a first sealing element 60 at least partially surrounding the support portion 40, thereby providing sealing in the first housing 10. The first sealing element 60 is made of a flexible material, such as silica gel or an elastic polymer. The first sealing element 60 is a cylinder surrounding the support portion 40. An extension length of the first sealing element 60 is substantially the same as an extension length of the support portion 40. In this way, the first sealing element 60 can substantially completely surround the support portion 40 in length.

Referring to FIG. 3 to FIG. 5 and FIG. 9 to FIG. 11, the first sealing element 60 includes:
an end wall 610, arranged perpendicular to a longitudinal direction of the first sealing element 60, where after fitting, the end wall 610 abuts against the first end 310 of the support 30, that is, is supported by the support portion 40; and
a peripheral side wall 620, formed by extending from the end wall 610, where the peripheral side wall is substantially in an annular shape to surround the support portion 40. The peripheral side wall 620 has a free end facing away from the end wall 610, and the free end is open. The support portion 40 extends into the peripheral side wall 620 through the open free end.

The end wall 610 of the first sealing element 60 is provided with:
a plug-in hole 61, where during fitting, the plug-in hole 61 is opposite the plug-in hole 42 of the support portion 40. After the fitting, the aerosol output tube 11 successively passes through the plug-in hole 61 and the plug-in hole 42, and the first sealing element 60 at least partially provides sealing between the aerosol output tube 11 and the plug-in hole 42 of the support portion 40.

The end wall 610 of the first sealing element 60 is further provided with:
a liquid guide hole 65, where during fitting, the liquid guide hole is opposite a port of the liquid channel 44 of the support 40 at an upper end, so that the liquid substrate in the liquid storage cavity 12 flows into the liquid channel 44 through the liquid guide hole 65.

After the fitting, the peripheral side wall 620 of the first sealing element 60 is located between the first housing 10 and the support 40, to provide sealing therebetween. The peripheral side wall 620 of the first sealing element 60 is provided with:
a sealing rib 641, close to the end wall 610 and surrounding the peripheral side wall 620, where after the fitting, the sealing rib 641 provides sealing at a position close to the open end of the liquid storage cavity 12, so that the liquid substrate in the liquid storage cavity 12 can substantially leave the liquid storage cavity 12 only through the liquid guide hole 65; and
a sealing rib 642, close to the free end of the peripheral side wall 620 facing away from the end wall 610, and surrounding the peripheral side wall 620, where after the fitting, the sealing rib 642 is supported by the connecting end portion 410 of the support portion 40, to provide sealing between a position close to the connecting end portion 410 and the first housing 10.

The peripheral side wall 620 of the first sealing element 60 is provided with:
openings 66, located on two sides in the thickness direction, where after the fitting, the opening 66 on one side is opposite the opening 48 of the support portion 40, and the opening 66 on the other side is opposite the opening 49 of the support portion 40. A width dimension d3 of the opening 66 is less than the width of the opening 48 of the support portion 40, and the width dimension d3 of the opening 66 is substantially equal to the width dimension d2 of the opening 49 of the support portion 40.

In a specific implementation, an extension dimension of the opening 66 in the longitudinal direction of the first sealing element 60 covers the window 43 of the support portion 40, or the opening 66 is at least partially is opposite or at least partially coincides with the window 43 of the support portion 40 in the thickness direction of the support portion 40, which is advantageous to prevent impact on the output of the aerosol through the window 43 as a result of shielding or blocking of the window 43.

Further, in a more preferred implementation, referring to FIG. 5, FIG. 6, and FIG. 8, the support portion 40 is further provided with a vent hole 45 close to the upper end. A lower end of the vent hole 45 is in airflow communication with the atomization chamber 441 through a groove 46 on an outer surface of the support portion 40. An upper end of the vent hole 45 faces the liquid storage cavity 12. Correspondingly, the first sealing element 60 further has a columnar portion 67 extending from the end wall 610. As shown in the figure, the columnar portion 67 is in a shape of a column. After fitting, the columnar portion 67 extends from the upper end into the vent hole 45.

In an implementation, the vent hole 45 has an extension length in a range of about 3 mm to 10 mm, and the vent hole 45 has an inner diameter in a range of 3 mm to 6 mm. The columnar portion 67 has a length in a range of about 3 mm to 10 mm and an outer diameter in a range of about 3 mm to 6 mm. An inner surface of the vent hole 45 is provided with a groove extending in an axial direction, to maintain a gap or an air gap between the column portion and the vent hole after the fitting. In this way, air in the atomization chamber 441 can successively pass through the groove 46 and the gap or the air gap between the vent hole 45 and the columnar portion 67 along the arrows R3 in FIG. 6 and FIG. 8 and enter the liquid storage cavity 12, so as to supply air into the liquid storage cavity 12 to relieve negative pressure in the liquid storage cavity 12.

Further referring to FIG. 7 and FIG. 8, the vent hole 45 and the columnar portion 67 of the first sealing element 60 are both staggered from the liquid channel 44. The columnar portion 67 extends from the end wall 610 of the first sealing element 60. Specifically, a wall 671 of the liquid guide hole 65 is defined on the end wall 610 of the first sealing element 60. The columnar portion 67 extends from the wall 671. The first sealing element 60 further has an avoidance hole 672 closer to an end portion in the width direction than the liquid guide hole 65, so that air entering the gap or the air gap between the vent hole 45 and the columnar portion 67 enters the liquid storage cavity 12 through the avoidance hole 672. In an implementation, the avoidance hole 672 is in a shape of a curved arc. In addition, the avoidance hole 672 is isolated from the liquid guide hole 65. A cross-sectional area of the avoidance hole 672 is less than an area of the liquid guide hole 65.

Further referring to FIG. 2, FIG. 3, FIG. 5, FIG. 10, and FIG. 11, the electronic atomization device 100 further includes:
a flexible second sealing element 70, where after fitting, the second sealing element 70 is located in the cavity 440 of the support portion 40, and surrounds the atomization assembly/the porous body 21, to provide sealing between the atomization assembly/the porous body 21 and the support portion 40.

Specifically, a structure of the second sealing element 70 includes:
an upper end wall 710, arranged perpendicular to the longitudinal direction of the electronic atomization device 100/the support 30/the support portion 40; and
a peripheral side wall 720, formed by the upper end wall 710 by extending in the longitudinal direction of the electronic atomization device 100/the support 30/the support portion 40, and being substantially in an annular shape.

After the fitting, the peripheral side wall 720 surrounds the atomization assembly/the porous body 21 in a circumferential direction of the atomization assembly/the porous body 21.

The upper end wall 710 is provided with an avoidance hole 72 and a sealing rib 71 surrounding the avoidance hole 72. During use, the liquid substrate flowing out through the liquid channel 44 flows to the surface 211 of the porous body 21 through the avoidance hole 72.

In an implementation, the sealing rib 71 is in a shape of a closed annulus. After the fitting, the sealing rib 71 of the upper end wall 710 abuts against the separation wall 420 of the support portion 40. In this way, the liquid substrate flowing out through the liquid channel 44 is prevented from leaking through a gap between the atomization assembly/the porous body 21 and the support portion 40.

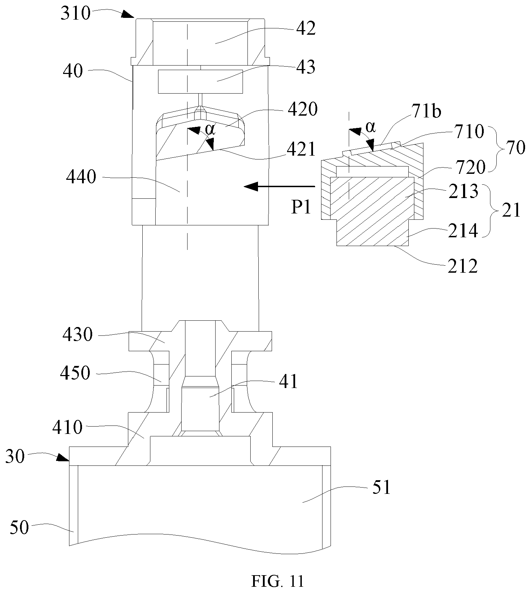

In a more preferred implementation, as shown in FIG. 11, the separation wall 420 has a lower surface 421. The lower surface 421 faces the separation wall 430/the support portion 50/the distal end 120. Alternatively, the lower surface 421 faces away from the liquid storage cavity 12/the proximal end 110. After the fitting, the upper end wall 710 of the second sealing element 70 abuts against the lower surface 421 of the separation wall 420.

As shown in FIG. 11, the lower surface 421 is arranged to be inclined. Specifically, the lower surface 421 is arranged to be inclined at an angle to the longitudinal direction of the support 30/the support portion 40/the electronic atomization device 100. Specifically, an angle a between the lower surface 421 and the longitudinal direction of the support 30/the support portion 40/the electronic atomization device 100 in FIG. 11 is in a range of 5° to 30°. More preferably, the angle α is in a range of 5° to 10°.

Correspondingly, the upper surface of the upper end wall 710 of the second sealing element 70 is also arranged to be inclined. An angle α between the upper surface of the upper end wall 710 of the second sealing element 70 and the longitudinal direction is also in the range of 5° to 30°. More preferably, the angle α is in the range of 5° to 10°.

Referring to FIG. 11, during fitting, when the second sealing element 70 wrapping the atomization assembly/the porous body 21 is moved and received in the cavity 440 in the thickness direction through the opening 48 of the support portion 40 along an arrow P1 in the figure, as the upper surface of the upper end wall 710 is in contact with the inclined lower surface 421 of the separation wall 420, the upper surface of the upper end wall is brought into increasingly close contact with the inclined lower surface of the separation wall, which is advantageous to improve a sealing effect achieved through a close interference fit between the sealing rib 71 and the lower surface 421 of the separation wall 420.

Alternatively, in some conventional implementations, the upper surface of the upper end wall 710 and/or the lower surface 421 of the separation wall 420 is arranged perpendicular to the longitudinal direction, that is, is not arranged to be inclined.

It should be noted that, the specification and the drawings of this application provide the preferred embodiments of this application, but this application is not limited to the embodiments described in this specification. Further, a person of ordinary skill in the art may make improvements or modifications according to the foregoing descriptions, and all of the improvements and modifications shall fall within the protection scope of the appended claims of this application.

## Claims

1. An electronic atomization device, comprising a housing, wherein the housing has a proximal end and a distal end facing away from each other, and the housing is provided therein with:
a liquid storage cavity, configured to store a liquid substrate;
a support, comprising a first support portion close to the proximal end in a longitudinal direction and a second support portion close to the distal end;
an atomization assembly, configured to atomize the liquid substrate to generate an aerosol, wherein the atomization assembly is at least partially accommodated and held in the first support portion; and
a cell, configured to supply power to the atomization assembly and at least partially accommodated and held in the second support portion.

2. The electronic atomization device according to claim 1, wherein the first support portion and the second support portion of the support are integrally molded by using a moldable material.

3. The electronic atomization device according to claim 1 or 2, wherein:
an extension length of the second support portion is greater than an extension length of the first support portion; and/or
a width dimension of the second support portion is greater than a width dimension of the first support portion.

4. The electronic atomization device according to claim 1 or 2, wherein:
the second support portion defines a first holding space and a second holding space arranged in sequence, and the second holding space is closer to the distal end than the first holding space;
the cell is at least partially accommodated and held in the first holding space; and
the second holding space is configured to at least partially accommodate and hold an airflow sensor.

5. The electronic atomization device according to claim 1 or 2, further comprising:
an electrical contact, held on the support and configured to guide a current between the cell and the atomization assembly, wherein the electrical contact is arranged to extend from the second support portion to the first support portion.

6. The electronic atomization device according to claim 1 or 2, wherein:
the housing comprises a first housing close to the proximal end and a second housing close to the distal end;
the first housing is arranged to surround the first support portion and avoid the second support portion; and
the second housing is arranged to surround the second support portion.

7. The electronic atomization device according to claim 6, wherein the first housing defines the liquid storage cavity.

8. The electronic atomization device according to claim 1 or 2, wherein:
the support has a transverse direction perpendicular to the longitudinal direction;
the first support portion has a first cavity, and the atomization assembly is accommodated in the first cavity; and
the first support portion has a first opening provided in the transverse direction, and the atomization assembly is configured to be accommodated in the first cavity or removed from the first cavity through the first opening in the transverse direction.

9. The electronic atomization device according to claim 8, wherein the first support portion is further provided with a second opening facing away from the first opening in the transverse direction, and a width of the second opening is less than a width of the first opening.

10. The electronic atomization device according to claim 1 or 2, further comprising:
a flexible first sealing element, comprising a first peripheral side wall, wherein the first peripheral side wall is arranged to be located between the first support portion and the housing and at least partially surround the first support portion, to provide sealing between the first support portion and the housing.

11. The atomizer according to claim 10, further comprising:
an air channel, defined between the first support portion and the first sealing element to provide a flowing path for air to enter the liquid storage cavity.

12. The atomizer according to claim 11, wherein:
the first support portion is provided with a vent hole; and
the first sealing element further comprises a columnar portion at least partially located within the vent hole, and the air channel is defined between an outer surface of the columnar portion and an inner surface of the vent hole.

13. The atomizer according to claim 12, wherein the first sealing element further comprises a first end wall, a liquid guide hole is provided on the first end wall, and the first end wall is constructed to seal the liquid storage cavity, so that the liquid substrate substantially leaves only through the liquid guide hole; and
the columnar portion extends from the first end wall into the vent hole.

14. The atomizer according to claim 13, wherein an avoidance hole adjacent to the columnar portion is further provided on the first end wall, so that air in the air channel enters the liquid storage cavity through the avoidance hole.

15. The electronic atomization device according to claim 1 or 2, further comprising:
a flexible second sealing element, arranged to be located between the atomization assembly and the first support portion to provide sealing between the atomization assembly and the first support portion.

16. The electronic atomization device according to claim 15, wherein:
the second sealing element comprises an upper end wall and a second peripheral side wall extending from the upper end wall, and the second peripheral side wall is arranged to at least partially surround the atomization assembly; and
an outer surface of the upper end wall is arranged to be inclined at an angle to an axial direction of the second sealing element.

17. The electronic atomization device according to claim 16, wherein the angle between the outer surface of the upper end wall and the longitudinal direction of the second sealing element is in a range of 5° to 30°.

18. The electronic atomization device according to claim 7, wherein the first cavity comprises a first inner surface close to the liquid storage cavity in the longitudinal direction of the support, and the first inner surface is arranged to be inclined at an angle to the longitudinal direction of the support.

19. The electronic atomization device according to claim 7, wherein:
the first support portion further defines a second cavity, located between the first cavity and the second support portion; and
the second cavity is in fluid communication with the first cavity to receive and hold an aerosol condensate in the first cavity.

20. A support for an electronic atomization device, wherein:
the support comprises a first support portion and a second support portion arranged in sequence in a longitudinal direction;
an extension length of the first support portion is less than an extension length of the second support portion;
the first support portion and the second support portion of the support are integrally molded by using a moldable material;
the first support portion is configured to at least partially accommodate and hold an atomization assembly; and
the second support portion is configured to at least partially accommodate and hold a cell.
